# EUROPÄISCHE PATENTANMELDUNG

(11) **EP 1 975 035 A2**
(43) Veröffentlichungstag der Anmeldung: **01.10.2008**
(21) Anmeldenummer: 08004548.7
(22) Anmeldetag: 12.03.2008
(51) Int. Cl.: B62B 3/14, B62B 3/18

(54) **Schiebegriff**

(30) Priorität: 27.03.2007 DE 102007015268
(71) Anmelder: Wanzl Metallwarenfabrik GmbH, 89336 Leipheim (DE)
(72) Erfinder: Eckert, Rainer, Dr., 73230 Kirchheim u. Teck (DE); Maatz, Bernhard, 86153 Augsburg (DE); Thalhofer, Armin, 89312 Günzburg (DE)

(57) **Zusammenfassung**

Die Erfindung betrifft einen Schiebegriff für einen von Hand bewegbaren Transportwagen (2), mit einer Einrichtung (3) für die Aufnahme von Werbemittel (4), wobei die Einrichtung (3) ein wechselbares Abdeckteil (5) aufweist.

Die Erfindung zeichnet sich dadurch aus, dass ein Teil der Einrichtung (3) wenigstens ein weiteres Bauteil (6) aufnimmt.

## Beschreibung

Die Erfindung betrifft einen Schiebegriff mit den Merkmalen im Oberbegriff des Hauptanspruchs.

Ein Schiebegriff dieser Gattung ist an per Hand bewegbaren Transportwagen wie beispielsweise Einkaufswagen angeordnet.

Ein solcher Schiebegriff ist aus dem Stand der Technik bekannt. Beispielsweise ist ein solcher im europäischen Patent EP 0 937 626 B1 beschrieben. Der Schiebegriff weist eine Einrichtung zur Aufnahme eines Werbemittels auf. Die Einrichtung ist mit einem Abdeckteil verschlossen. Das Abdeckteil und die Einrichtung weisen Rastmittel auf, so dass das Abdeckteil wechselbar angeordnet werden kann.

Der Nachteil dieser Lösung besteht jedoch darin, dass die komplette Fläche der Einrichtung zur Aufnahme eines Werbemittels oft nicht notwendig ist und ein Teil der Einrichtung anderweitig genutzt werden könnte.

Die Aufgabe der Erfindung besteht deshalb darin, einen verbesserten Schiebegriff zu beschreiben.

Die Erfindung löst die Aufgabe mit den Merkmalen im Hauptanspruch.

Die Einrichtung bietet genügend Fläche für die Aufnahme wenigstens eines weiteren Bauteils.

Es hat sich als vorteilhaft erwiesen, das Werbemittel mittig anzuordnen und rechts und links von diesem weitere Bauteile vorzusehen. Die Bauteile sind in der Einrichtung integriert und ortsfest angeordnet.

Es ist eine einfache Montage der Bauteile gegeben. Die Breite der Bauteile ist je nach Wunsch zu gestalten, die Tiefe des Bauteils richtet sich vorzugsweise nach der Tiefe der Einrichtung. Die Wechselbarkeit des Werbemittels durch Entfernen des Abdeckteils ist weiterhin gegeben.

Die Erfindung wird anhand eines Ausführungsbeispiels näher erläutert. Es zeigt
- Fig. 1: einen Schiebegriff mit einer Einrichtung zur Aufnahme eines Werbemittels und zwei weiteren Bauteilen in 3-D-Ansicht;
- Fig. 2: ein Abdeckteil, und zwei weitere Bauteile in 3-D-Ansicht, sowie
- Fig. 3: ein Bauteil für die Aufnahme beispielsweise eines Kaffeebechers und
- Fig. 4: ein Bauteil für die Aufnahme eines Scanners.

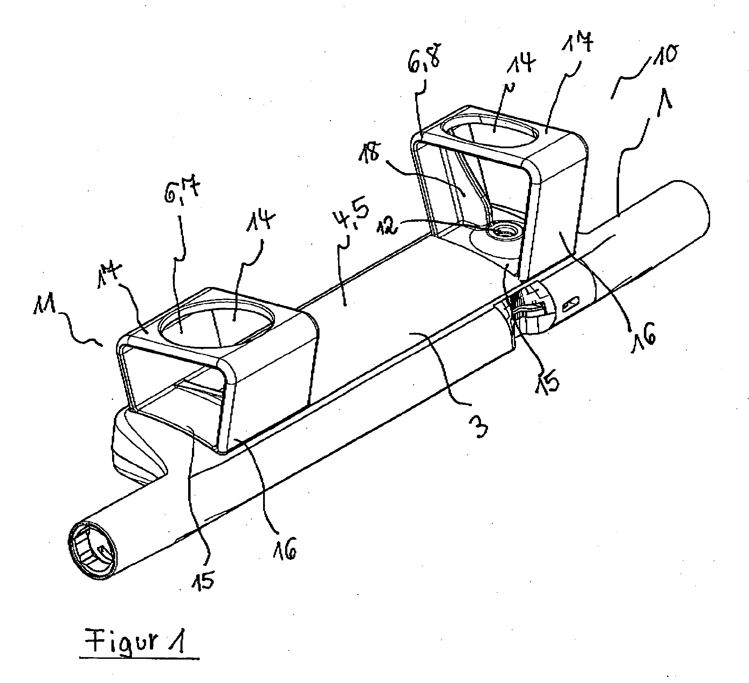

In Fig. 1 zeigt einen Schiebegriff 1 für einen von Hand bewegbaren Transportwagen 2. Der Schiebegriff 1 weist eine Einrichtung 3 für die Aufnahme von Werbemitteln 4 auf. Die Einrichtung 3 ist mit einem wechselbaren, transparenten Abdeckteil 5 versehen. Einrichtung 3 und Abdeckteil 5 weisen jeweils Rastmittel 9 auf. Das Abdeckteil 5 ist auf die Einrichtung 3 aufsetzbar und verrastbar. Mittels von Saugnäpfen ist das Abdeckteil 5 von der Einrichtung 3 abnehmbar.

Ein Teil der Einrichtung 3 nimmt wenigstens ein weiteres Bauteil 6 auf. Die Anzahl der weiteren Bauteile 6 ist frei wählbar. Es hat sich als vorteilhaft erwiesen, das Werbemittel 4 mittig in der Einrichtung 3 anzuordnen und rechts und links vom Werbemittel 4 weitere Bauteile 6 vorzusehen.

Es ist aber denkbar, nur ein weiteres Bauteil 6 in der Einrichtung 3 anzuordnen. Vorzugsweise ist das weitere Bauteil 6 in der rechten oder linken Ecke 10, 11 der Einrichtung 3 angeordnet. Das Werbemittel 4 mit Abdeckteil 5 füllt dann den übrigen Bereich der Einrichtung 3 aus.

Rastmittel 9 sind an der Innenseite der Einrichtung 3 sowie der Außenseiten von Abdeckteil 5 und des wenigstens einen weiteren Bauteils 6 vorgesehen.

Abdeckteil 5 und das wenigstens eine weitere Bauteil 6 weisen einen Steg 20 auf, der in der Einrichtung 3 angeordnet ist. An diesem Steg 20 sind die Rastmittel 9 angeordnet.

Jedes weitere Bauteil 6 ist ortsfest am Schiebegriff 1 angeordnet. Wie in Figur 1 dargestellt, weist jedes weitere Bauteil 6 eine Bohrung 12 für die Aufnahme eines Befestigungsmittels 13 auf. Als Befestigungsmittel 13 bietet sich eine Schraube, eine Niete oder ähnliches an

Es wäre auch denkbar, auf das Befestigungsmittel 13 zu verzichten und anstelle dessen, eine Verrasterung zwischen der Oberseite der Einrichtung 3 und dem Boden 15 des weiteren Bauteils 7, 8 vorzusehen.

Die weiteren Bauteile 6 weisen vorzugsweise die gleiche Höhe auf. Es können aber auch unterschiedliche Höhen denkbar sein.

Das weitere Bauteil 7, 8 ist für die Aufnahme beispielsweise eines Kaffeebechers bzw. eines Scanners vorgesehen. Beide weiteren Bauteile 7, 8 sind formschlüssig in der Einrichtung 3 angeordnet.

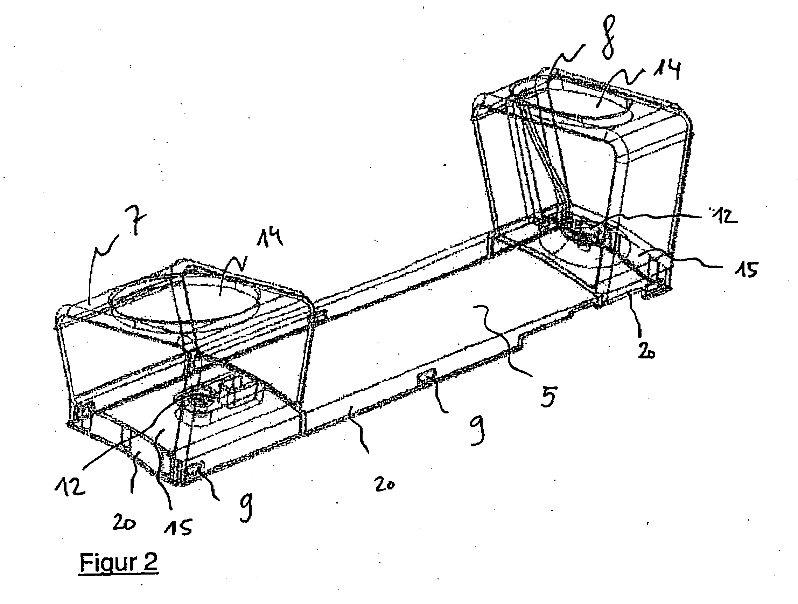

Figur 2 stellt zwei weitere Bauteile 7, 8 dar. Zwischen den beiden Bauteilen 7, 8 ist das Abdeckteil 5 angeordnet.

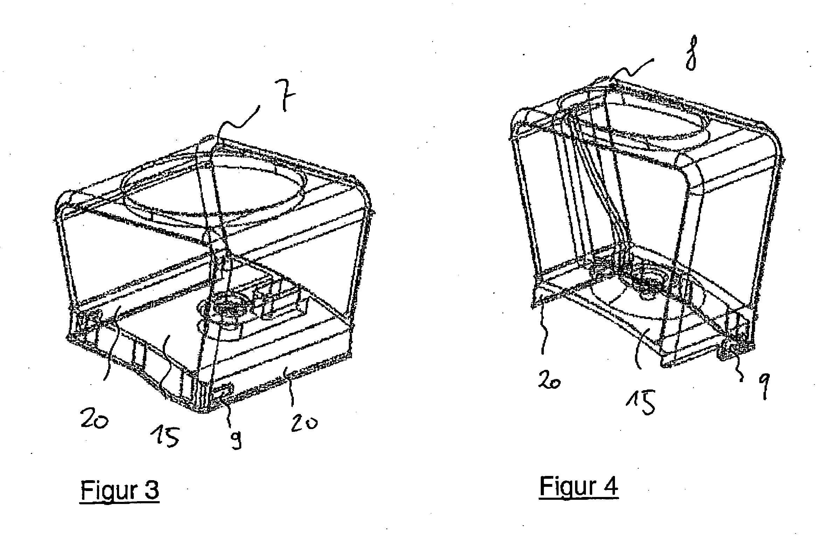

Vorzugsweise ist das weitere Bauteil 7, das in Figur 3 dargestellt ist, für die Aufnahme beispielsweise eines nicht näher dargestellten Kaffeebechers in der linken Ecke 11 der Einrichtung 3 vorgesehen. Die Öffnung 14 ist in Abhängigkeit der einzusetzenden Gegenstände wie beispielsweise eines Kaffeebechers auszuführen. Der Querschnitt kann rund, oval oder eckig gebildet sein. Auch ist denkbar, das weitere Bauteil 7 für die Aufnahme einer Ein- oder Mehrwegverpackung wie einer Dose, Flasche oder ähnlichem zu verwenden. Das weitere Bauteil 7 ist einteilig ausgeführt. Der Boden 15 des weiteren Bauteils 7 ist entsprechend der Ausführung der Einrichtung 3 leicht gebogen. Es sind zwei Seitenwände 16 vorgesehen. Regenwasser kann somit gut abfließen. Vorzugsweise sind die Seitenwände 16 an der Längsseite der Einrichtung 3 vorgesehen. Die Oberseite 17 der Einrichtung 3 ist leicht schräg gestaltet, so dass kein Regenwasser stehen bleibt.

Das weitere Bauteil 8, wie in Figur 4 dargestellt, ist für die Aufnahme eines aus dem Stand der Technik bekannten Scanners bestimmt. Das weitere Bauteil 8 ist vorzugsweise mehrteilig ausgeführt. Die Öffnung 14 für die Aufnahme eines Scanners ist in Abhängigkeit des einzusetzenden Scanners auszuführen. Der Querschnitt kann beispielsweise rund, oval oder eckig gebildet sein. Der Boden 15 des weiteren Bauteils 8 ist entsprechend der Ausführung der Einrichtung 3 leicht gebogen. Es sind zwei Seitenwände 16 vorgesehen. Regenwasser kann somit gut abfließen. Vorzugsweise sind die Seitenwände 16 an der Längsseite der Einrichtung 3 vorgesehen. Die Oberseite 17 der Einrichtung 3 ist leicht schräg gestaltet, so dass kein Regenwasser stehen bleibt. Im Inneren weist das weitere Bauteil 8 eine zusätzliche Halterung 18 auf. Diese Halterung 18 ist vertikal angeordnet und bietet eine Fixierung für den Scanner. Die Halterung 18 ist vorzugsweise ortsfest angeordnet.

Auch wäre denkbar, die Halterung 18 vertikal anzuordnen.

Die Ecken sind bei jedem weiteren Bauteil 6, 7, 8 abgerundet, wie es in den Figuren dargestellt ist.

Zwischen dem weiteren Bauteil 7, 8 und dem Abdeckteil 5 ist keine Verbindung notwendig. Der Abstand zwischen den Bauteilen 7, 8 und dem Abdeckteil 5 ist derart zu wählen, dass das Abdeckteil 5 mittels von Saugnäpfen herausgenommen werden kann.

Weiterhin kann eine Zettelklemme 19 vorgesehen sein. Diese ist vorzugsweise wechselbar im Abstand zwischen dem Bauteil 7, 8 und dem Abdeckteil 5 angeordnet. Eine solche Klemme 19 kann in Form eines Metallclips gebildet sein.

### Bezugszeichenliste

- 1: Schiebegriff
- 2: Transportwagen
- 3: Einrichtung
- 4: Werbemittel
- 5: Abdeckteil
- 6: weiteres Bauteil
- 7: weiteres Bauteil f. Aufnahme v. Kaffeebecher
- 8: weiteres Bauteil f. Aufnahme v. Scanner
- 9: Rastmittel
- 10: rechte Ecke (Einrichtung 3)
- 11: linke Ecke (Einrichtung 3)
- 12: Bohrung
- 13: Befestigungsmittel
- 14: Öffnung (weiteres Bauteil 7, 8)
- 15: Boden (weiteres Bauteil 7, 8)
- 16: Seitenwand (weiteres Bauteil 7, 8)
- 17: Oberseite (weiteres Bauteil 7, 8)
- 18: Halterung
- 19: Zettelklemme, Metallclip
- 20: Steg (Abdeckteil 5, weiteres Bauteil 6)

## Patentansprüche

1. Schiebegriff für einen von Hand bewegbaren Transportwagen (2), mit einer Einrichtung (3) für die Aufnahme von Werbemittel (4), wobei die Einrichtung (3) ein wechselbares Abdeckteil (5) aufweist, **dadurch gekennzeichnet, dass** ein Teil der Einrichtung (3) wenigstens ein weiteres Bauteil (6) aufnimmt.

2. Schiebegriff nach Anspruch 1, **dadurch gekennzeichnet, dass** das Werbemittel (4) mittig in der Einrichtung (3) angeordnet ist und rechts und links vom Werbemittel (4) weitere Bauteile (6) vorgesehen sind.

3. Schiebegriff nach den Ansprüchen 1 und 2, **dadurch gekennzeichnet, dass** das weitere Bauteil (6) ortsfest am Schiebegriff (1) angeordnet ist.

4. Schiebegriff nach den Ansprüchen 1 bis 3, **dadurch gekennzeichnet, dass** das weitere Bauteil (6) zur Aufnahme eines Kaffeebechers (7) oder eines Scanners (8) vorgesehen ist.
